# EUROPEAN PATENT SPECIFICATION

(11) **EP 1 804 620 B1**
(45) Date of publication and mention of the grant of the patent: **21.01.2015**
(21) Application number: 05810564.4
(22) Date of filing: 12.10.2005
(51) Int. Cl.: A47D 13/02, B62B 7/14, B62B 9/24

(54) **INFANT CARRIER**
SÄUGLINGSTRAGEVORRICHTUNG
PORTE-BEBE

(30) Priority: 13.10.2004 US 617658 P
(43) Date of publication of application: 11.07.2007
(73) Proprietor: GRACO CHILDREN'S PRODUCTS INC., Exton, PA 19341 (US)
(72) Inventor: COOLEY, Kara M., Mid Levels, Hong Kong (CN); CATON, Marguerite I., Downingtown, PA 19334 (US); GRIFFITHS, Sharon L., Reading, Pennsylvania 19607 (US)
(74) Representative: Metten, Karl-Heinz
(86) International application number: PCT/US2005/036880
(87) International publication number: WO 2006/065332

(56) References cited:
- EP-A- 0 922 421
- US-A- 2 846 699
- US-A- 5 819 341
- US-B1- 6 213 362
- US-B1- 6 367 875

## Description

### FIELD OF THE INVENTION

This invention relates to an infant carrier that can be carried by a caregiver and that can be placed in a mechanical or other conveyance, such as a stroller or an infant car seat. More specifically, this invention relates to an infant carrier that can be carried by a caregiver across the caregiver's shoulders and that can be releasably coupled to a stroller.

### BACKGROUND OF THE INVENTION

Infant carriers generally provide a soft cocoon-like child containment area in which an infant can be placed. Certain conventional infant carriers can be worn by a caregiver across the caregiver's shoulders. These infant carriers can be designed to hold the infant in an upright position or to allow the infant to lie in a horizontal or slightly angled position. Infants often fall asleep in both vertical and horizontal infant carriers. When the caregiver is no longer able to carry the infant in the infant carrier, for example, if the caregiver becomes weary under the combined weight of the infant and the infant carrier, the infant generally must be removed from the infant carrier and buckled, or otherwise secured, in a different conveyance, such as a stroller. Moving the infant from the infant carrier to the conveyance, however, often awakens the infant.

Thus, there is a need in the art for an infant carrier that is capable of being worn by a caregiver and that can be securely and releasably coupled to a child conveyance, such as a stroller, without removing the infant from the infant carrier.

European patent EP 0 922 421 describes a safety hammock for young children and babies. United States patent US 5 819 341 describes a collapsible and convertible combination baby bed and baby carrier system. United States patent US 6 213 362 describes a sling-type infant carrier. United States patent US 2 846 699 describes an infant carrier device,

### SUMMARY OF THE INVENTION

The invention relates to a child product comprising an infant carrier and a stroller as claimed in claim 1. Preferred features of the invention are set out in the dependent claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate several embodiments of the invention and, together with the description, serve to explain the principles of the invention.
FIG. 1 is a top perspective view of an infant carrier showing an infant positioned in the infant carrier according to the invention.
FIG. 2 is a top perspective view of the infant carrier of FIG. 1. showing the infant carrier coupled to a stroller.
FIG. 3 is a detail perspective view of the infant carrier shown in FIG. 2 showing a fastener arrangement in which a carrier fastener is coupled to a stroller fastener.
FIG. 4 is a view of the infant carrier of FIG. 1. in which the carrier is being worn by a caregiver.
FIG. 5. is a top perspective view of the infant carrier of FIG. 1.
FIG. 6 is a side elevation view of the infant carrier of FIG. 1 showing an infant positioned in the infant carrier.
FIG. 7 is a top plan view of a child restraint system of the infant carrier of FIG. 1.
FIG. 8 is a detail perspective view of a fastener cover to cover the carrier fastener of the infant carrier of FIG. 1.
FIG. 9 is a cross-sectional view of the carrier taken along line 9-9 of FIG. 6.
FIG. 10 is a top perspective view of an infant carrier according to another embodiment of the invention.

### DETAILED DESCRIPTION OF THE PREFERRED EMBODIMENTS

Reference will now be made in detail to presently preferred embodiments of the invention, examples of which are illustrated in the accompanying drawings. An effort has been made to use the same reference numbers throughout the drawings to refer to the same or like parts.

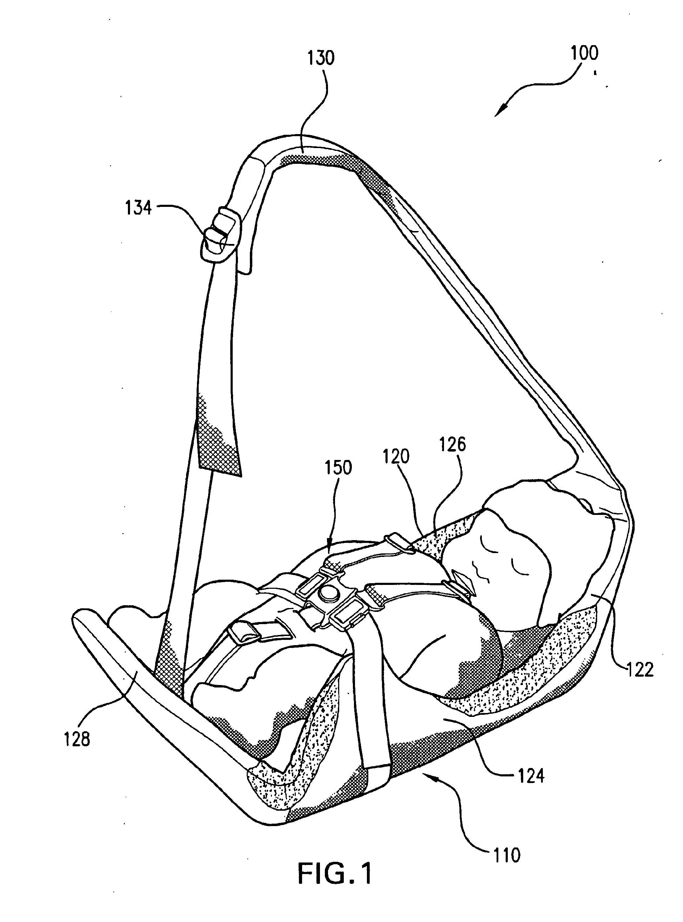

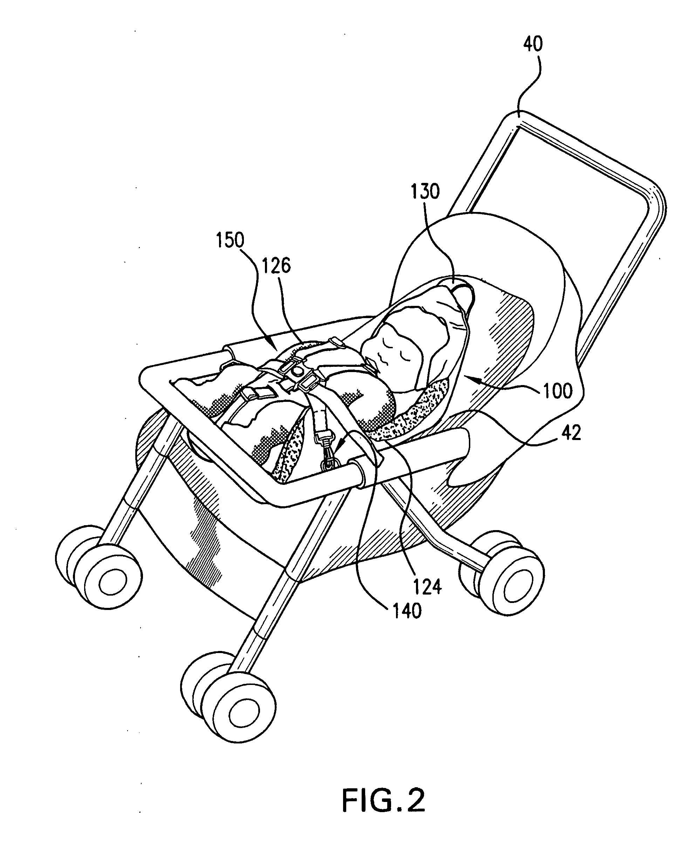

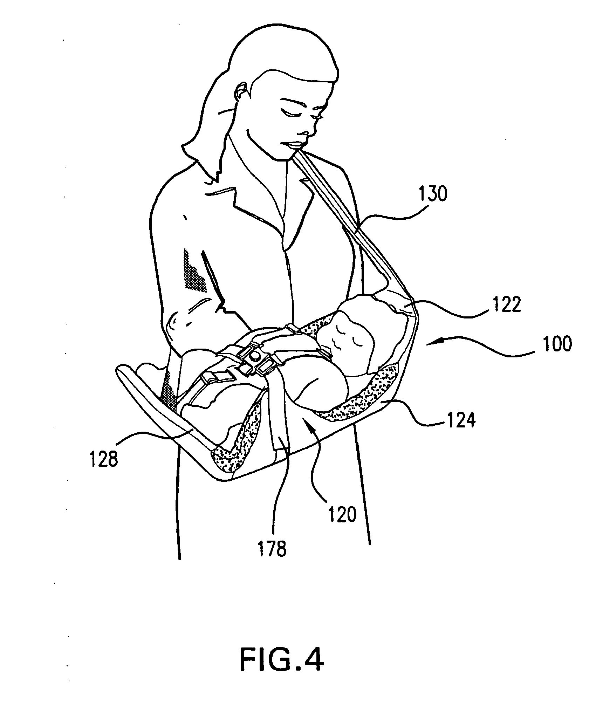

FIG. 1 is a perspective view of an embodiment of an infant carrier 100 in accordance with the invention. The infant carrier 100 can be worn by a caregiver, for example, across the caregiver's neck and/or shoulders as shown in FIG. 4, or the infant carrier 100 can be releasably coupled to a stroller 40, as shown in FIG. 2. When the infant carrier 100 is coupled to the stroller 40, the infant carrier 100 can be placed directly on top of the child seating area 42 of the stroller 40. In this position, the infant carrier 100 provides an ergonomically supportive environment for the infant. This infant carrier 100, which may remain in a generally horizontal orientation both when carried by a caregiver or placed in a stroller, is particularly suited for newborns and infants up to six months. The infant carrier 100 can be transferred easily between the caregiver and the stroller 40. Accordingly, when a caregiver needs to place an infant sleeping in the infant carrier 100 in the stroller 40 or needs to pick up the infant in the infant carrier 100 from the stroller 40, the caregiver need not worry about lifting the infant out of the infant carrier 100 or waking up the infant. In addition, the infant carrier 100 includes a carrier fastener configured to releasably couple to a stroller fastener so that that infant carrier 100 can be coupled securely to the stroller 40.

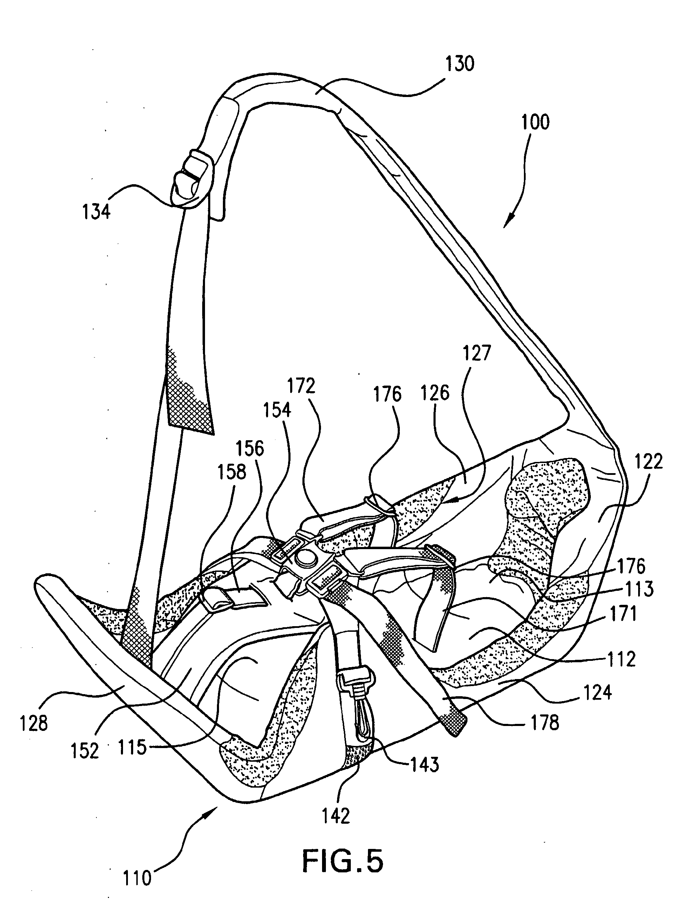

As shown in FIGS. 1 and 5, the infant carrier 100 generally includes a body 110 to receive an infant, a carrying strap 130 connected to the body 110 to enable a caregiver to wear the infant carrier 100, and at least one carrier fastener 143, such as the illustrated J-hook, configured to releasably couple the infant carrier 100 to the stroller 40.

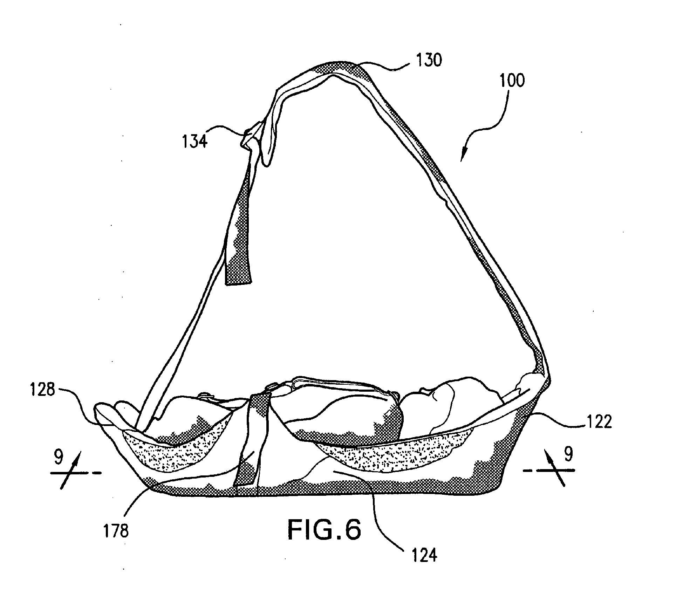

FIGS. 5 and 6 illustrate the body 110 of the infant carrier 100 according to one embodiment of the invention. The body 110 generally includes a bottom panel 112 and a side wall 120 having a lower edge connected to the bottom panel 112. The bottom panel 112 and the side wall 120 can form a cocoon-like structure for the infant.

The side wall 120 can be non-rigid. The side wall 120 can be moved or flexed relative to the bottom panel 112. For example, the non-rigid side wall 120 can conform to the contour of the caregiver. In addition, the non-rigid characteristic of the side wall 120 enables the side wall 120 to fold toward the bottom panel 110 for storage.

The side wall 120 can include a head panel 122, first and second side panels 124, 126 on opposite sides of the bottom panel 112, and a foot panel 128. The head panel 122, first and second side panels 124, 126, and foot panel 128 may form a continuous side wall 120, as shown in FIG. 5. Alternatively, adjacent panels 122, 124, 126, 128 may be spaced from each other so that there are gaps along the side wall 120 of the infant carrier 100.

The bottom panel 112 generally can include a head portion 113 and a foot portion 115. When an infant is placed on the bottom panel 112, the infant's head can rest on the head portion 113 of the bottom panel 112, and the infant's lower body can rest on the foot portion 115.

The head portion 113 of the bottom panel 112 may include padding to serve as a soft head support for the infant. Additionally, any other portion of the bottom panel 112 or side wall 120 may include padding for increased comfort.

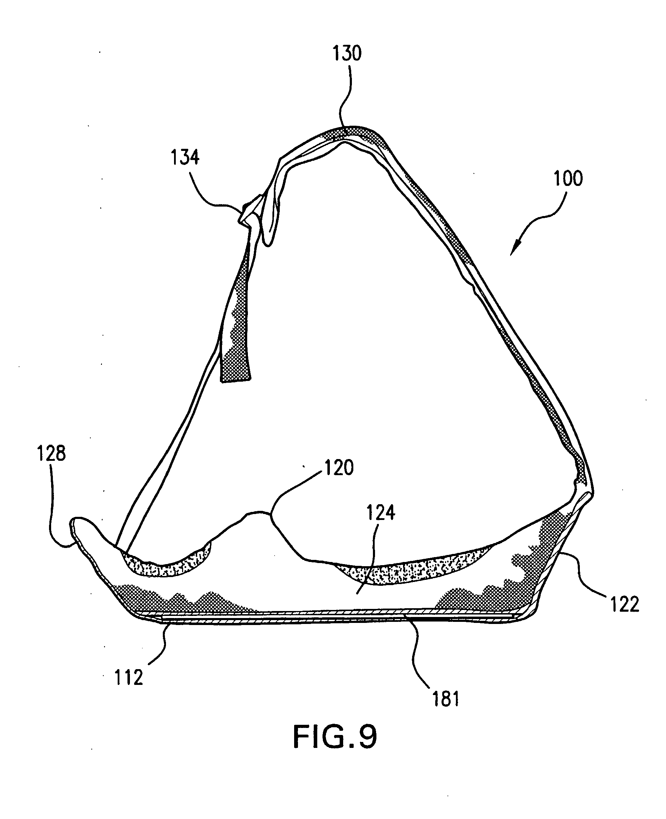

As shown in FIG. 9, the bottom panel 112 can include a pocket and a stiffening board 181, disposed in the pocket, that serves as a barrier or rigid support for the infant to help protect the infant's back. The stiffening board 181 may be contoured to be compatible with the child seating area 42 of the stroller 40. The stiffening board 181 allows the infant carrier 100 to be self-supportable (i.e., able to remain in a horizontal position when the infant carrier 100 is placed on a surface and not flip over on its side when an infant is in the infant carrier 100). The stiffening board 181 may be removable to permit easier washing of the infant carrier 100, or it may be fixed. The stiffening board 181 may comprise plastic, metal, or any other suitable material. Stiffening boards may also be employed in the head panel 122, the side panels 124, 126, and/or the foot panel 128.

As mentioned above, the infant carrier 100 includes a strap 130. The strap 130 is sized so that a caregiver can wear the infant carrier 100 across the caregiver's shoulder(s) and/or neck, as shown in FIG. 4. The strap 130 is connected to the carrier body 110 at at least two attachment points. For example, the strap 130 may be connected to the head panel 122 of the body 110 at a first attachment point, and the strap 130 may be connected to the foot panel 128 of the body 110 at a second attachment point. The strap 130 can include a strap adjuster 134 to enable the strap 130 to adjust to different lengths.

The strap 130 is configured to be worn by a caregiver such that the caregiver can carry the infant carrier 100 either in a horizontal or in an angled position. The strap 130, when worn by a caregiver, can be positioned over one shoulder and behind the caregiver's neck and arm, such that the carrier 100 is in a sling-like position. The strap 130 is non-rigid. Accordingly, when the infant carrier 100 is not being worn by a caregiver, the caregiver can position or tuck the strap 130 alongside the outer surface of either side panel 124, 126 or under the bottom panel 112, away from an infant in the infant carrier 100. FIG. 2, for example, shows the strap 130 in a tucked-away position under the bottom panel 112.

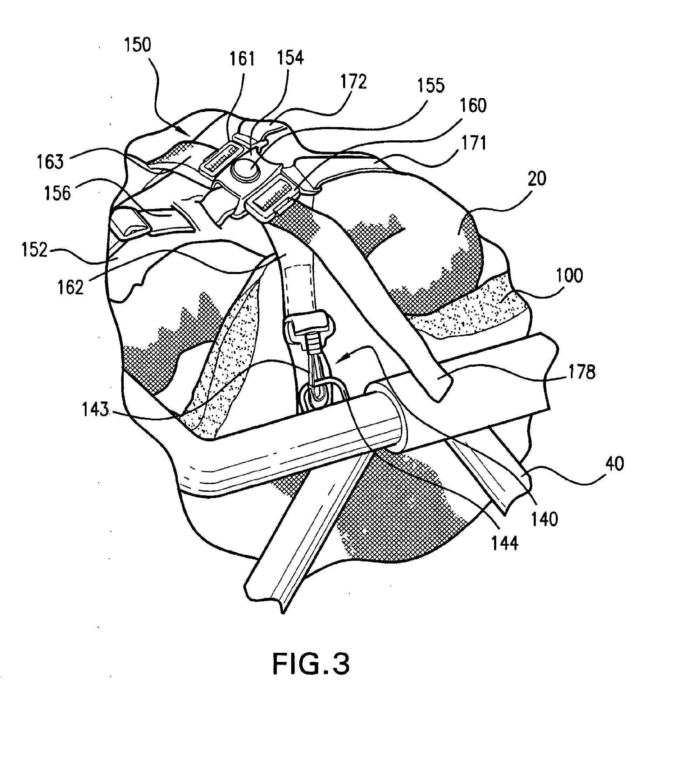

The infant carrier 100 can be releasably coupled to the stroller 40 by a fastener arrangement 140. The fastener arrangement 140 may include snaps, zippers, buckles, Velcro®, J-hook and D-ring, belts and slits in fabric, or any other suitable type of fastening elements. The fastener arrangement 140 includes at least one carrier fastener 143 on the carrier 100 and at least one stroller fastener 144 on the stroller 40 configured to releasably couple to the at least one carrier fastener 143. For example, the carrier fastener can be any of a J-hook, snap, buckle, Velcro ®, zipper, or any other suitable fastener, and the stroller fastener can be a corresponding D-ring, snap, latch, Velcro ®, zipper, or any other suitable fastener, respectively, to mate with the carrier fastener. In the illustrated embodiment of FIG. 3, the carrier fastener 143 is a J-hook, and the stroller fastener 144 is a D-ring. It will be recognized that, in an alternative arrangement the D-ring can be on the infant carrier 100, and the J-hook can be on the stroller 40. Any combination of fastening elements may be used to releasably couple the infant carrier 100 to the stroller 40. In addition, any suitable number of fastener arrangements 140 may be used to releasably couple the infant carrier 100 to the stroller 40. In one embodiment, first and second carrier fasteners 143 can be located on the first and second side panels 124, 126, respectively, and corresponding stroller fasteners 144 can be located on either side of the child seating area 42 of the stroller 40. Further, the carrier fasteners 143 can be located on outer surfaces of the respective side panels 124, 126.

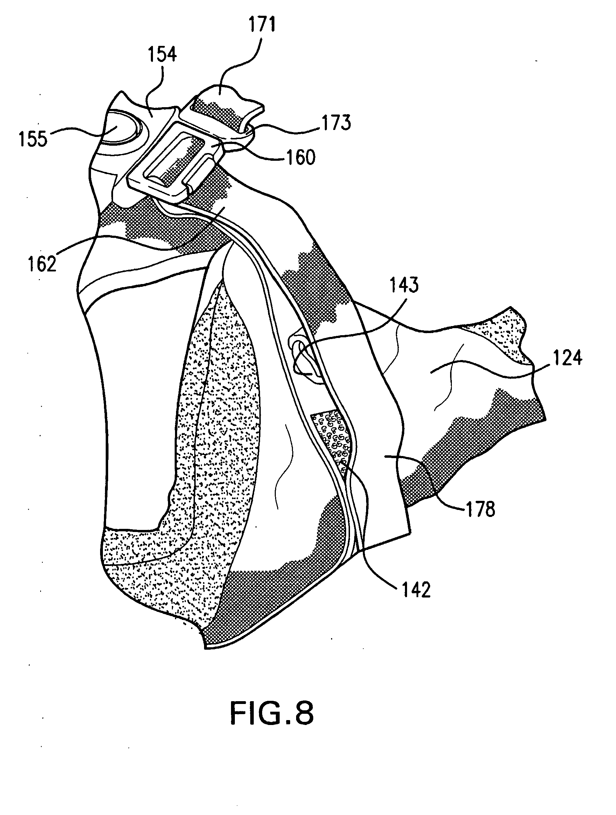

When not in use, the carrier fasteners 143 may be covered by a fastener cover. For example, as shown in FIG. 8, strap extensions 178 of respective waist straps 162, 163 of a child restraint system 150 may be placed over the carrier fasteners 143 and connected to hook-and-loop (Velcro®) areas 142. The hook-and-loop areas 142 may be located on an outer surface of the respective side panels 124, 126 below the carrier fasteners 143. Accordingly, when the infant carrier 100 is worn by a caregiver as shown in FIG. 4, the carrier fasteners 143 will not scratch or rub against the caregiver. When the infant carrier 100 is to be coupled to the stroller 40, the strap extensions 178 can be pulled off of the hook-and-loop areas 142, exposing the carrier fasteners 143 for use.

The infant carrier 100 can include a child restraint system 150 to secure an infant to the infant carrier body 110. FIGS. 3, 5, and 7 show an embodiment of the child restraint system 150. The child restraint system 150 can be a 5-point restraint system. The child restraint system 150 generally can include a restraint panel 152, a buckle 154 attached to the panel 152, first and second waist straps 162, 163 with first and second latches 160, 161, respectively, first and second shoulder straps 171, 172 with first and second shoulder strap connectors 173, 174, respectively, and a leg strap 156.

The restraint panel 152 can be connected to the foot panel 128 and can be positioned between an infant's legs. The buckle 154 is attached to the restraint panel 152 near an infant's waist. The buckle 154 includes a release button 155 to release the latches 160, 161.

The waist straps 162, 163 can be connected to the first and second side panels 124, 126, respectively. The latches 160, 161 releasably couple the waist straps 162, 163 to the buckle 152 and can include adjusters to adjust the length of the waist straps 162, 163.

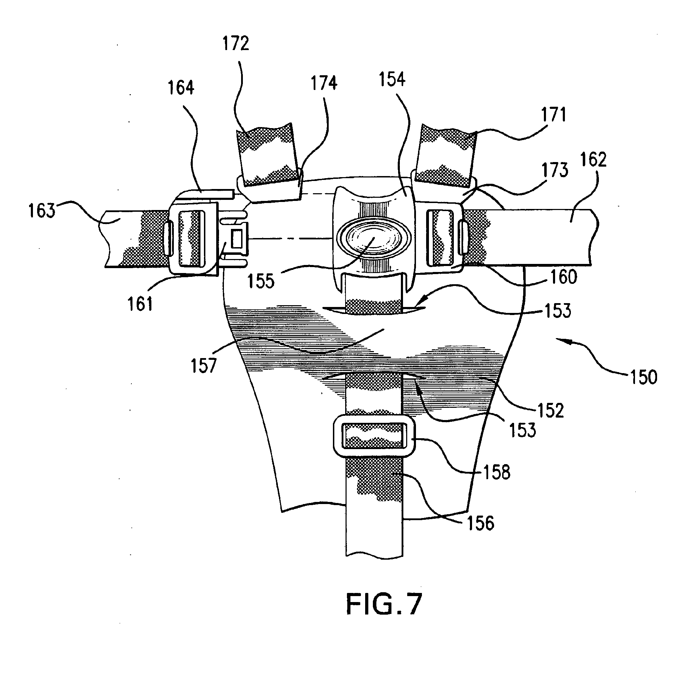

The first and second shoulder straps 171, 172 can be releasably coupled to the buckle 154 via the first and second shoulder strap connectors 173, 174. One end of the shoulder straps 171, 172 can be attached to the bottom panel 112 of the carrier body 110, and the other end of the shoulder straps 171, 172 can couple to shoulder strap connectors 173, 174. The shoulder strap connectors 173, 174 each include a passage (not shown) for receiving a locking rod 164 on the latches 160, 161, as shown in FIG. 7.

The leg strap 156 is threaded under a band 157 of the panel 152 formed by two slits 153. The leg strap 156 can be attached at one end to the foot panel 128 and at a second end to the buckle 152. The leg strap 156 includes a leg strap adjuster 158 to adjust the length of the leg strap 156. By adjusting the length of the leg strap 156, the position of the restraint panel 152 can be altered to allow for infants of varying sizes to fit in the infant carrier 100.

To buckle an infant into the infant carrier 100, the restraint panel 152 is positioned between the infant's legs and over the waist area of the infant. The leg strap 156 is adjusted to the appropriate length according to the length of the infant. The shoulder straps 171, 172 are positioned over the infant's shoulders and adjusted for appropriate length. The locking rods 164 of the latches 160, 161 are inserted into the passages in the shoulder strap connectors 173,174, and the latches 160, 161 are inserted into and coupled to the buckle 152. To unbuckle the infant, the release button 155 is depressed, the latches 160, 161 are removed from the buckle 154, and the shoulder strap connectors 173, 174 are uncoupled from the locking rods 164.

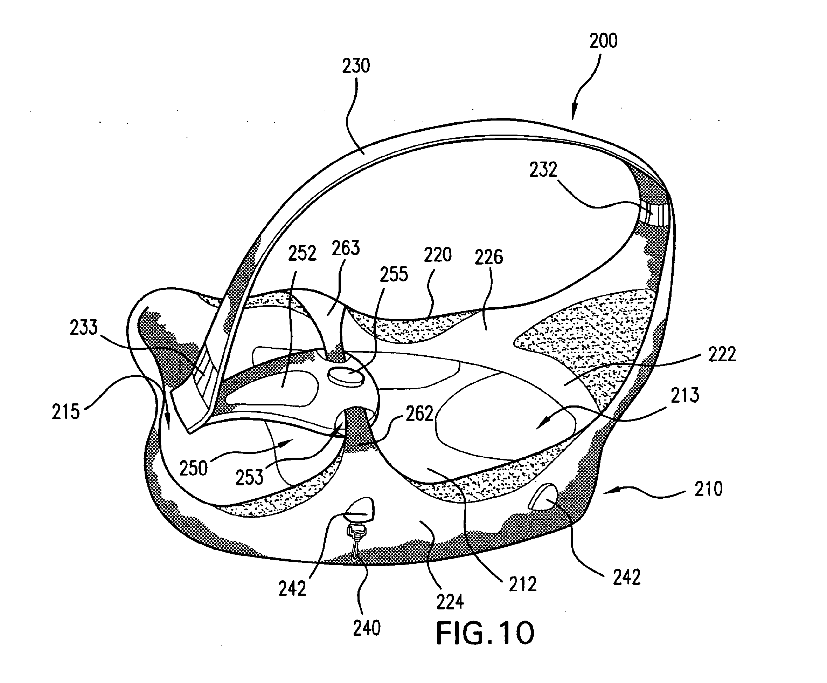

FIG. 10 illustrates an infant carrier 200 according to another embodiment of the invention. The infant carrier 200 can be releasably coupled to a stroller 40 or carried by a caregiver, similar to the embodiment of FIGS. 1-9. The infant carrier 200 includes a body 210, a strap 230, a plurality of carrier fasteners 240, and a child restraint system 250.

The body 210 includes a bottom panel 212 and a side wall 220. The bottom panel can include a head portion 213 and a foot portion 215. The side wall 220 can include a head panel 222 and opposing first and second side panels 224, 226 to define a continuous wall.

The strap 230 can be releasably attached at one end 232 to the head panel 222 and releasably attached at a second end 233 to the foot portion 215 of the bottom panel 212. The strap 230 could include additional attachment locations. The strap 230 can be detached from the carrier 200 at the first and second ends 232, 233. The strap 230 may be a rigid or a non-rigid structure.

The carrier fasteners 240 can be positioned on an outer surface of the side panels 224, 226 and are configured to couple with stroller fasteners 144 on a stroller 40 in a manner similar to that described for the embodiment of FIGS. 1-9. The carrier fasteners 240 can be J-hooks, zippers, snaps, Velcro®, belts, or any other suitable fasteners. The carrier fasteners 240 can mate with corresponding stroller fasteners 144 on the stroller 40. Carrier fastener covers in the form of pockets 242 can be positioned over the carrier fasteners 240 such that when the infant carrier 200 is decoupled from the stroller 40 to be worn by a caregiver, the carrier fasteners 240 are covered to prevent any scraping or rubbing of the carrier fasteners 240 against the caregiver. When the carrier fasteners 240 are needed, the carrier fasteners 240 can be pulled down and out of the pockets 242. FIG. 10 illustrates one carrier fastener covered by the rightmost pocket 242 and an additional carrier fastener 240 pulled out of the leftmost pocket 242. Any suitable number of carrier fasteners 240 in any suitable location may be used to releasably couple the infant carrier 200 to the stroller 40.

The child restraint system 250 can be a 3-point restraint system.

The child restraint system 250 can include a restraint panel 252 attached to a foot portion 215 of the bottom panel 212, for example, adjacent to the second end 233 of the strap 230. The restraint panel 252 can include an opening 253 for receiving latches (not shown) of waist straps 262, 263. A buckle (not shown) is positioned inside the opening 253. The buckle includes a release button 255 positioned on the restraint panel 252 such that, upon depressing the button 255, the latches can be released.

It will be recognized that the infant carrier can be fit in and releasably coupled to various suitable child conveyances or containment structures. For example, the infant carrier may be releasably coupled with an infant car seat, a bassinet, or other suitable child conveyances or containment structures. Furthermore, the infant carrier may be coupled or mounted to many different types of strollers other than that shown in FIG. 2, including single and double strollers, and strollers with differently shaped frames or stroller seats.

The infant carrier can provide a soft, comfortable child containment area for an infant that can fit within the confines of a hard-shelled stroller, infant car seat, or other conveyance or containment structure. It will be recognized that the infant car seat can be made of any suitable material, such as fabrics, resilient foams, and fiberfills. For example, the outer surfaces of the carrier body, such as the outer surfaces of the side panels 124, 126, may comprise a durable textured material or a durable textile such as woven polyester or nylons. The inner surfaces of the carrier body, such as the inner surfaces of the side panels 124, 126, may comprise a soft, possibly breathable fabric, such as knits, textured wovens, non-wovens, napped or terry type fibers, velour terry, cotton knits, soft textured double knits, soft mesh knits or jersey knits. Fillings of washable resilient materials, such as foams and fiberfills, can be present between the inner surfaces and the outer surfaces of the carrier body. The strap 130 may comprise a soft, but sturdy, inner material and a durable outer material. The lining of the strap 130 can be soft foam and polyester for comfort. Of course, any other suitable material may be used. Further, portions of, or the entirety of, the carrier body may comprise a memory foam, such as GracoPedic memory foam. The memory foam can minimize pressure points and enhance infant comfort. The materials can all be made of washable and dryable material. Further, the fasteners 140, the buckle 152, and other parts of the infant carrier may comprise plastics or metals.

The carrier body may also include ventilated areas. For exemplary purposes only, the darkened or shaded areas of the carrier body shown in the above described figures may be replaced with a mesh or other porous ventilation material or through holes to allow air to flow through the infant carrier. As another example, the carrier body 110 may include inner breathing mesh strips at a point where the bottom panel 112 joins the side wall 120 in the upper half of the carrier 100 to provide increased air flow to the infant.

It will be recognized that the infant carrier may also be oriented in a vertical position, as opposed to the horizontal position shown in the figures. An infant carrier designed to be oriented in a vertical position could include additional straps and infant surround panels. Such a vertically-oriented infant carrier can be used to carry infants of higher weight and age ranges than a horizontally-oriented infant carrier. Further, the infant carrier could be adapted to incorporate a separate harness system worn by the caregiver, which provides a complete carrier system.

The preferred embodiments have been set forth herein for the purpose of illustration. This description, however, should not be deemed to be a limitation on the scope of the invention. The true scope of the invention are indicated by the following claims.

## Claims

1. A child product comprising an infant carrier (100) comprising:
a body (110) including a bottom panel (112) and a non-rigid side wall (120) having a lower edge connected to the bottom panel (112), and
a strap (130) connected to the body (110) at at least two attachment points,
and the infant carrier (100) has at least one fastener (140) on the body (110), wherein
that the at least one fastener (140) is configured to releasably couple the infant carrier (100) to a stroller (40), and that the infant carrier (100) is configured to be placed directly into a seating area (42) of the stroller (40), **characterized in that** said child product
further comprising a stroller (40) including a seating area (42) and at least one stroller fastener (144),
wherein the at least one carrier fastener (140) is releasable coupled to the at least one stroller fastener (144) and the body (110) is resting in the seating area (42).

2. The child product according to claim 1, wherein
the side wall (120) includes first and second side panels (124, 126) on opposite sides of the bottom panel (112), and the at least one fastener (140) includes a first fastener on the first side panel and a second fastener on the second side panel.

3. The child product according to claim 2, wherein
the first and second fasteners are located on outer surfaces of the first and second side panels (124, 126), respectively.

4. The child product according to claim 1, wherein
the at least one fastener (140) comprises a J-hook (143).

5. The child product according to claim 1, further comprising
at least one fastener cover to cover the at least one fastener when not in use.

6. The child product according to claim 5, further comprising
a the child restraint system (150) that is connected to the body (110) and that includes at least one waist strap (162, 163), wherein the at least one fastener cover comprises a strap extension (175) of the at least one waist strap (162, 163) to cover the at least one fastener (140) when not in use.

7. The child product according to claim 5, wherein
the at least one fastener cover comprises a pocket (242) formed in the body (210) to cover the at least one fastener (240) when not in use.

8. The child product according to claim 2, wherein
the side wall (120) further includes a head panel (122).

9. The child product according to claim 8, wherein
the first and second side panels (124, 126) and the head panel (122) define a continuous wall.

10. The child product according to claim 8, wherein
the side wall (120) further comprises a foot panel (128).

11. The child product according to claim 10, wherein
the first and second side panels (124, 126), the head panel (122), and the foot panel (128) define a continuous wall.

12. The child product according to claim 10, wherein
the strap (130) is connected to the head panel (122) and to the foot panel (128).

13. The child product according to claim 12, wherein
the strap (130) connects to the head panel (122) at a single attachment point.

14. The child product according to claim 1, wherein
the strap (130) is releasable connected to the body (110) at one of the at least two attachment points.

15. The child product according to claim 1, wherein
the at least one stroller fastener comprises a D-ring (144), and wherein the at least one fastener of the infannt carrier comprises a J-hook (143) to releasably couple with the D-ring (144).

16. The child product according to claim 1, wherein the bottom panel (112) includes a stiffening board (181), which is contoured to be compatible with the child seating area (42).

17. The infant carrier according to claim 1, wherein
the bottom panel (112) is configured to be compatible with a child seating area (42) of the stroller (40) , and the bottom panel (112) comprises a stiffening board (181), wherein the stiffening board (181) is contoured to be compatible with the child seating area (42).

## Patentansprüche

1. Kinderprodukt, umfassend eine Säuglingstragevorrichtung (100), umfassend:
einen Körper (110), der eine Bodenplatte (112) und eine nicht starre Seitenwand (120) mit einer unteren Kante, die mit der Bodenplatte (112) verbunden ist, umfasst, und
einen Gurt (130), der an zumindest zwei Befestigungspunkten mit dem Körper (110) verbunden ist,
und wobei die Säuglingstragevorrichtung (100) zumindest ein Befestigungselement (140) am Körper (110) aufweist, wobei das zumindest eine Befestigungselement (140) ausgelegt ist, um die Säuglingstragevorrichtung (100) lösbar mit einem Kinderwagen (40) zu koppeln, und die Säuglingstragevorrichtung (100) ausgelegt ist, um direkt in einen Sitzbereich (42) des Kinderwagens (40) platziert zu werden, **dadurch gekennzeichnet, dass** das Kinderprodukt ferner einen Kinderwagen (40) umfasst, der einen Sitzbereich (42) und
zumindest ein Kinderwagenbefestigungselement (144) beinhaltet, wobei das zumindest eine Tragevorrichtungsbefestigungselement (140) lösbar mit dem zumindest einen Kinderwagenbefestigungselement (144) gekoppelt ist und der Körper (110) im Sitzbereich (42) untergebracht ist.

2. Kinderprodukt nach Anspruch 1, wobei
die Seitenwand (120) auf einander gegenüberliegenden Seiten der Bodenplatte (112) eine erste und zweite Seitenplatte (124, 126) beinhaltet und das zumindest eine Befestigungselement (140) ein erstes Befestigungselement an der ersten Seitenplatte und ein zweites Befestigungselement an der zweiten Seitenplatte beinhaltet.

3. Kinderprodukt nach Anspruch 2, wobei
sich das erste und zweite Befestigungselement an Außenflächen der ersten bzw. zweiten Seitenplatte (124, 126) befinden.

4. Kinderprodukt nach Anspruch 1, wobei
das zumindest eine Befestigungselement (140) einen J-Haken (143) umfasst.

5. Kinderprodukt nach Anspruch 1, ferner umfassend
zumindest eine Befestigungselementabdeckung, um das zumindest eine Befestigungselement bei Nichtgebrauch abzudecken.

6. Kinderprodukt nach Anspruch 5, ferner umfassend
ein Kinderrückhaltesystem (150), das mit dem Körper (110) verbunden ist und das zumindest einen Hüftgurt (162, 163) beinhaltet, wobei die zumindest eine Befestigungselementabdeckung eine Gurtverlängerung (173) des zumindest einen Hüftgurts (162, 163) umfasst, um das zumindest eine Befestigungselement (140) bei Nichtgebrauch abzudecken.

7. Kinderprodukt nach Anspruch 5, wobei
die zumindest eine Befestigungselementabdeckung eine im Körper (210) ausgebildete Tasche (242) umfasst, um das zumindest eine Befestigungselement (240) bei Nichtgebrauch abzudecken.

8. Kinderprodukt nach Anspruch 2, wobei
die Seitenwand (120) ferner eine Kopfplatte (122) beinhaltet.

9. Kinderprodukt nach Anspruch 8, wobei
die erste und zweite Seitenplatte (124, 126) sowie die Kopfplatte (122) eine durchgehende Wand definieren.

10. Kinderprodukt nach Anspruch 8, wobei
die Seitenwand (120) ferner eine Fußplatte (128) umfasst.

11. Kinderprodukt nach Anspruch 10, wobei
die erste und zweite Seitenplatte (124, 126), die Kopfplatte (122) sowie die Fußplatte (128) eine durchgehende Wand definieren.

12. Kinderprodukt nach Anspruch 10, wobei
der Gurt (130) mit der Kopfplatte (122) und mit der Fußplatte (128) verbunden ist.

13. Kinderprodukt nach Anspruch 12, wobei
der Gurt (130) an einem einzigen Befestigungspunkt mit der Kopfplatte (122) in Verbindung steht.

14. Kinderprodukt nach Anspruch 1, wobei
der Gurt (130) an einem der zumindest zwei Befestigungspunkte lösbar mit dem Körper (110) verbunden ist.

15. Kinderprodukt nach Anspruch 1, wobei
das zumindest eine Kinderwagenbefestigungselement einen D-Ring (144) umfasst und wobei das zumindest eine Befestigungselement der Säuglingstragevorrichtung einen J-Haken (143) zur lösbaren Kopplung mit dem D-Ring (144) umfasst.

16. Kinderprodukt nach Anspruch 1, wobei die Bodenplatte (112) ein Versteifungsbrett (181) beinhaltet, das so konturiert ist, dass es mit dem Kindersitzbereich (42) kompatibel ist.

17. Säuglingstragevorrichtung nach Anspruch 1, wobei
die Bodenplatte (112) ausgestaltet ist, um mit einem Kindersitzbereich (42) des Kinderwagens (40) kompatibel zu sein, und die Bodenplatte (112) ein Versteifungsbrett (181) umfasst, wobei das Versteifungsbrett (181) so konturiert ist, dass es mit dem Kindersitzbereich (42) kompatibel ist.

## Revendications

1. Produit pour enfants, comprenant un porte-bébé (100) comprenant :
un corps (110) incluant un panneau inférieur (112) et une paroi latérale (120) non rigide ayant un bord inférieur raccordé au panneau inférieur (112), et
une sangle (130) raccordée au corps (110) au niveau d'au moins deux points d'attache,
et le porte-bébé (100) ayant au moins un élément de fixation (140) sur le corps (110), dans lequel l'élément de fixation (140) au moins au nombre de un est configuré pour accoupler de façon détachable le porte-bébé (100) à une poussette (40), et le porte-bébé (100) est configuré pour être placé directement dans une zone d'assise (42) de la poussette (40),
**caractérisé en ce que** ledit produit pour enfants comprend également une poussette (40) incluant une zone d'assise (42) et au moins un élément de fixation de poussette (144), dans lequel l'élément de fixation (140) de porte-bébé au moins au nombre de un est accouplé de façon détachable à l'élément de fixation de poussette (144) au moins au nombre de un, et le corps (110) repose dans la zone d'assise (42).

2. Produit pour enfants selon la revendication 1, dans lequel la paroi latérale (120) inclut des premier et deuxième panneaux latéraux (124, 126) sur des côtés opposés du panneau inférieur (112), et l'élément de fixation (140) au moins au nombre de un inclut un premier élément de fixation sur le premier panneau latéral et un deuxième élément de fixation sur le deuxième panneau latéral.

3. Produit pour enfants selon la revendication 2, dans lequel les premier et deuxième éléments de fixation sont situés sur des surfaces extérieures des premier et deuxième panneaux latéraux (124, 126) respectivement.

4. Produit pour enfants selon la revendication 1, dans lequel l'élément de fixation (140) au moins au nombre de un comprend un crochet en J (143).

5. Produit pour enfants selon la revendication 1, comprenant également au moins un couvercle d'élément de fixation pour couvrir l'élément de fixation au moins au nombre de un quand celui-ci n'est pas utilisé.

6. Produit pour enfants selon la revendication 5, comprenant également le système de retenue de l'enfant (150) qui est raccordé au corps (110) et qui inclut au moins une sangle de taille (162, 163), dans lequel le couvercle d'élément de fixation au moins au nombre de un comprend un prolongement de sangle (178) de la sangle de taille (162, 163) au moins au nombre de un pour couvrir l'élément de fixation (140) au moins au nombre de un quand celui-ci n'est pas utilisé.

7. Produit pour enfants selon la revendication 5, dans lequel le couvercle d'élément de fixation au moins au nombre de un comprend une poche (242) formée dans le surface de siège (210) pour couvrir l'élément de fixation (240) au moins au nombre de un quand celui-ci n'est pas utilisé.

8. Produit pour enfants selon la revendication 2, dans lequel la paroi latérale (120) inclut également un panneau de tête (122).

9. Produit pour enfants selon la revendication 8, dans lequel les premier et deuxième panneaux latéraux (124, 126) et le panneau de tête (122) définissent une paroi continue.

10. Produit pour enfants selon la revendication 8, dans lequel la paroi latérale (120) comprend également un panneau de pied (128).

11. Produit pour enfants selon la revendication 10, dans lequel les premier et deuxième panneaux latéraux (124, 126), le panneau de tête (122) et le panneau de pied (128) définissent une paroi continue.

12. Produit pour enfants selon la revendication 10, dans lequel la sangle (130) est raccordée au panneau de tête (122) et au panneau de pied (128).

13. Produit pour enfants selon la revendication 12, dans lequel la sangle (130) se raccorde au panneau de tête (122) au niveau d'un point d'attache unique.

14. Produit pour enfants selon la revendication 1, dans lequel la sangle (130) se raccorde de façon détachable au corps (110) au niveau des points d'attache au moins au nombre de deux.

15. Produit pour enfants selon la revendication 1, dans lequel l'élément de fixation de poussette au moins au nombre de un comprend un anneau en D (144), et dans lequel l'élément de fixation au moins au nombre de un du porte-bébé comprend un crochet en J (143) destiné à s'accoupler de façon détachable à l'anneau en D (144).

16. Produit pour enfants selon la revendication 1, dans lequel le panneau inférieur (112) inclut une plaque de raidissement (181) qui est profilée de façon être compatible avec la zone d'assise (42) de l'enfant.

17. Porte-bébé selon la revendication 1, dans lequel
le panneau inférieur (112) est profilé de façon à être compatible avec une zone d'assise (42) de l'enfant de la poussette (40), et le panneau inférieur (112) comprend une plaque de raidissement (181), dans lequel la plaque de raidissement (181) est profilée pour être compatible avec la zone d'assise (42) de l'enfant.
